# EUROPEAN PATENT APPLICATION

(11) **EP 3 690 695 A1**
(43) Date of publication of application: **05.08.2020**
(21) Application number: 19217064.5
(22) Date of filing: 17.12.2019
(51) Int. Cl.: G06F 21/62, G06F 21/80, G06F 16/11

(54) **DATA MANAGEMENT SYSTEM AND DATA MANAGEMENT METHOD**

(30) Priority: 04.02.2019 JP 2019017935
(71) Applicant: Hitachi, Ltd., Tokyo 100-8280 (JP)
(72) Inventor: Nemoto, Jun, Tokyo, 100-8280 (JP); Hayasaka, Mitsuo, Tokyo, 100-8280 (JP); Nomura, Shimpei, Tokyo, 100-8280 (JP)
(74) Representative: Manitz Finsterwald Patent- und Rechtsanwaltspartnerschaft mbB

(57) **Abstract**

An object of the invention is to enable a fine grain access control in a unit finer than an access unit specified in a specification of application software such as a block-chain and a database. A data management system, in which data to be processed by an information processing device is accessed by a file system in which date is accessed in a file unit, stores fine grain access information related to a file to be accessed. The fine grain access information includes a position of the file, an access right to the file, and retention information, and access to the file from the information processing device is controlled based on the fine grain access information. The file includes a block-chain block, and the fine grain access information is stored as an extended attribute in the file including the block-chain block.

## Description

### BACKGROUND OF THE INVENTION

### 1. Field of the Invention

The present invention relates to a data management system and a data management method, and particularly to a data management system and a data management method suitable for supporting fine grain access of data in an application such as a block-chain system or a relational database management system (RDBMS).

### 2. Description of the Related Art

In recent years, the so-called "right to be forgotten" has been proposed as a new concept of rights for privacy protection, and laws have been introduced in each country and region. When the right to be forgotten is specified, an organization that handles personal data will be obliged to delete the personal data in response to a request from a subject of the personal data (for example, a holder of a deposit account). However, in practice, the personal data cannot always be deleted immediately, and depending on the data, it is necessary to set a certain retention period (grace period before deleting) according to other laws and deny access except for specific persons (for example, an auditor specified by laws) .

Access control and deletion of the personal data as described above is required to be executed in a unit finer than a unit such as a storage volume or a file in which a block-chain or a database is stored, and an object. For example, in a block-chain, since the personal data is included in a unit of transaction data in a block-chain block, the access control and the deletion needs to be executed in that unit.

In addition, the block-chain or the database is accessed without using the block-chain system or the RDMS, or is copied (or migrated) to another storage for use and utilization by, for example, an audit application or data analysis application backup software. Even in such a case, it is necessary to prevent unintended access and to satisfy the above requirements as well. That is, in such a case, in the block-chain or the database, it is necessary to support access (fine grain access) in a unit finer than a unit in which access is specified in a specification.

A data access control technique related to the fine grain access control is disclosed in, for example, JP-T-2014-525058 (Patent Literature 1). Patent Literature 1 discloses a data access control method in which a large-size file is virtually divided into a plurality of subfiles having a fixed-length for management so as to improve efficiency in file-level backup and migration, that is, discloses a technique of controlling the access in a unit of the subfiles obtained by dividing.

In a file system described in Patent Literature 1, a plurality of subfiles obtained by dividing a parent file are generated from the parent file. In subfile processing at that time, subfile management information is generated based on management information of a data block of the parent file. Then, by changing I/O of the parent file to I/O of the subfile, an access file can be accessed efficiently.

However, in the data access method described in Patent Literature 1, an access control in the unit of subfile is possible, but the access control in consideration of internal structures (for example, where the personal data exists) specific to the block-chain and the database cannot be implemented. Further, Patent Literature 1 does not consider the access control when the block-chain and the database are copied (or migrated) to another storage.

### SUMMARY OF THE INVENTION

An object of the invention is to provide a data management system and a data management method that enable a fine grain access control in a unit finer than an access unit specified in a specification of application software such as a block-chain and a database in a file system and an object storage. In addition, the object is to provide a data management system and a data management method that enable a fine grain access control similar to that of a copy source and a migration source in a copy destination storage and a migration destination storage, even when a file and an object with settings for the fine grain access are copied or migrated.

It is preferable that the data management system of the invention includes a processor and controls access to data to be processed by an information processing device, the data includes a plurality of pieces of sub-data, fine grain access information includes a position of the sub-data in the data and a provision of an access right to the sub-data, and the processor controls access to the sub-data in the data based on the fine grain access information.

According to the invention, it is possible to provide a data management system and a data management method that enable a fine grain access control in a unit finer than an access unit specified in a specification of application software such as a block-chain and a database in a file system and an object storage. In addition, it is possible to provide a data management system and a data management method that enable a fine grain access control similar to that of a copy source and a migration source in a copy destination storage and a migration destination storage, even when a file and an object with settings for the fine grain access are copied or migrated.

### BRIEF DESCRIPTION OF THE DRAWINGS

FIG. 1 is a diagram showing an overall configuration of a data management system and a functional configuration of a block-chain node.
FIG. 2 is a diagram showing a hardware and software configuration of a data management system according to a first embodiment.
FIG. 3 is a block diagram showing a module structure of a data management program according to the first embodiment.
FIG. 4 is a block diagram showing a module structure of a block-chain program.
FIG. 5 is a block diagram showing a module structure of a file system program.
FIG. 6 is a diagram showing an example of a block-chain block storage file.
FIG. 7 is a diagram showing an example of a block-chain block.
FIG. 8 is a diagram showing an example of a block-chain metadata management table.
FIG. 9 is a diagram showing an example of a fine grain access control table.
FIG. 10 is a diagram showing an example of a data management policy.
FIG. 11 is a flowchart showing fine grain access control information setting processing.
FIG. 12 is a flowchart showing details of read processing.
FIG. 13 is a flowchart showing details of access control processing.
FIG. 14 is a diagram showing a hardware and software configuration of a data management system according to a second embodiment.
FIG. 15 is a block diagram showing a module structure of a data management program according to the second embodiment.
FIG. 16 is a block diagram showing a module structure of an object storage program.
FIG. 17 is a diagram showing an example of an object management table.
FIG. 18 is a flowchart showing backup processing.

### DESCRIPTION OF THE PREFERRED EMBODIMENTS

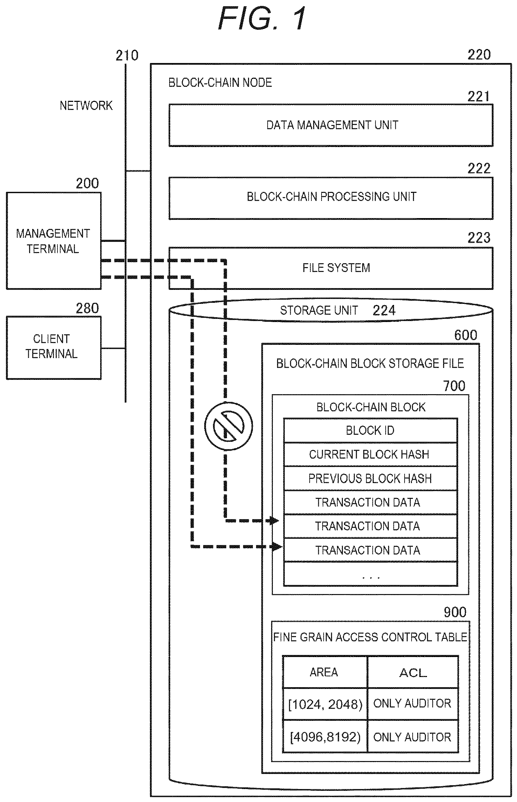

Embodiments according to the invention will be described below with reference to FIGS. 1 to 18.

### [First Embodiment]

A first embodiment according to the invention will be described below with reference to FIGS. 1 to 13.

In the present embodiment, a data management system based on a block-chain system to which block-chain nodes are connected will be described.

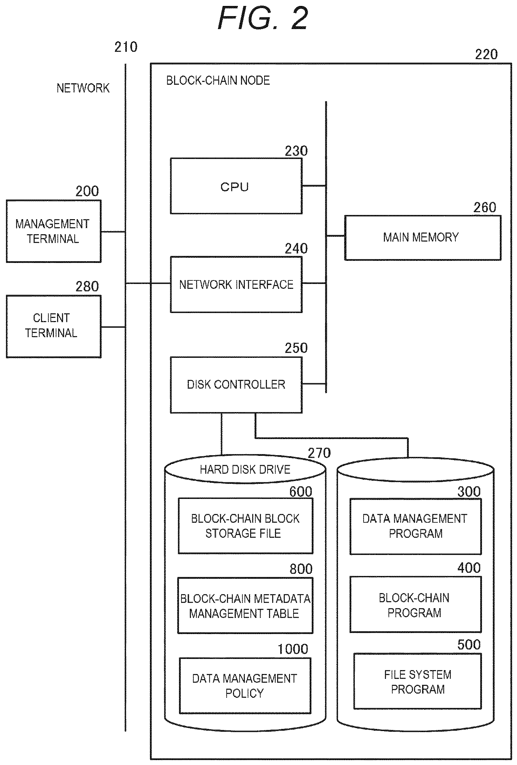

First, a configuration of the data management system according to the first embodiment will be described with reference to FIGS. 1 and 2.

As shown in FIG. 1, the data management system includes a plurality of block-chain nodes 220, a management terminal 200, and a client terminal 280. The block-chain node 220, the management terminal 200, and the client terminal 280 are connected to one another via a network 210. In general, in the block-chain system, the respective block-chain nodes 220 communicate with one another and operate cooperatively to provide a service to a client.

The block-chain node 220 includes a data management unit 221, a block-chain processing unit 222, a file system 223, and a storage unit 224 as functional configurations. The data management unit 221 has a function that uniformly manages and controls an access right and a storage period of data in response to a request from the management terminal 200 in order to comply with various laws and regulations related to privacy protection and the like. The block-chain processing unit 222 has a function that performs transaction processing in response to a request from the client terminal 280 and stores the trail as a block-chain. The file system 223 has a function that reads, writes and manages various files in response to a request from the data management unit 221 or the block-chain processing unit 222. For example, as shown in FIG. 1, the block-chain processing unit 222 stores a block-chain block 700 (to be described later) in a block-chain block storage file 600 (data, to be described later) according to the function of the file system 223.

The storage unit 224 has a function that stores data and programs necessary for the block-chain node 220.

Here, an outline of processing of the data management system of the present embodiment is as follows.

In the block-chain system according to the present embodiment, according to a deletion request from a user, for example, a personal data administrator requests the data management unit 221 to delete transaction data (sub-data) related to the user. A data management program 300 extracts a corresponding transaction and specifies an area to be deleted. The data management unit 221 sets an appropriate access right and retention period (maintenance period) in a transaction unit according to a data management policy (details will be described later) preset in view of the various laws and regulations. Setting contents are stored as fine grain access control information in a fine grain access control table 900 of the block-chain block storage file 600. As shown in the fine grain access control table 900 in FIG. 1, when an area that can be accessed only by an auditor is set, even an administrator is prohibited from accessing the area via a file system as well as being prohibited from accessing the area via a block-chain program. Then, when the set retention period expires, the file system 223 deletes the data in the area.

Next, a hardware and software configuration of each component constituting the data management system will be described with reference to FIG. 2.

The client terminal 280 is an information processing device used to use a transaction processing service provided by one or more block-chain nodes 220. In the client terminal 280, a client program for using the transaction processing service operates.

The management terminal 200 is an information processing device used for managing the block-chain system. The administrator manages the access right and the retention period of the block-chain data via the data management program 300, and manages a block-chain node via a block-chain program 400. Details of the data management program 300 and the block-chain program 400 will be described later.

The network 210 is a network that connects the client terminal 280, the management terminal 200, and the block-chain node 220 to one another. The network 210 may be, for example, a local area network (LAN) or a wide area network (WAN) such as the Internet.

The block-chain node 220 is an information processing device that provides the transaction processing service to the client terminal 280. The block-chain node 220 includes a CPU 230, a network interface 240, a disk controller 250, and a main memory 260, which are connected via an internal communication path (for example, a bus).

The CPU 230 controls each unit of the block-chain node 220 and executes a program loaded in the main memory 260. The main memory 260 is a storage device that temporarily stores the loaded program and work data. The network interface 240 is a unit that controls an interface for communication with the client terminal 280 and the management terminal 200 via the network 210. The disk controller 250 is a unit that controls an auxiliary storage device such as a hard disk drive (HDD) 270 and a solid state drive (SSD) . The disk controller 250 inputs and outputs data of the hard disk drive 270, for example, in a block unit, based on input and output requests of various programs loaded in the main memory 260.

The hard disk drive 270 is a large-capacity storage device for storing data read and written by the various programs loaded in the main memory 260.

The data management program 300, the block-chain program 400, and a file system program 500 are installed in the hard disk drive 270.

The data management program 300 is a program for implementing the function of the data management unit 221, and is a program for uniformly manages and controls the access right and the storage period of the data in response to the request from the management terminal 200 in order to comply with the various laws and regulations related to the privacy protection and the like.

The block-chain program 400 is a program for implementing the function of the block-chain processing unit 222, and is a program that performs the transaction processing in response to the request from the client terminal 280 and stores the trail as the block-chain.

The file system program 500 is a program for implementing the functions of the file system 223, and is a program for inputting and outputting a file specified in the file system 223 and managing the file.

Further, the hard disk drive 270 stores the block-chain block storage file 600, a block-chain metadata management table 800, and a data management policy 1000 as files. Details of the block-chain block storage file 600, the block-chain metadata management table 800, and the data management policy 1000 will be described later.

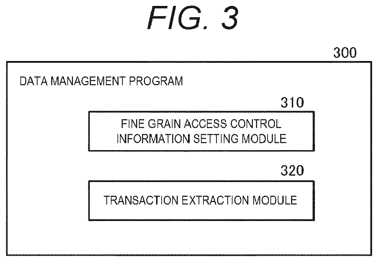

Next, a module structure of each program operating in the block-chain node 220 will be described with reference to FIGS. 3 to 5.

As shown in FIG. 3, the data management program 300 includes a fine grain access control information setting module 310 and a transaction extraction module 320.

The fine grain access control information setting module 310 is executed according to an instruction from the administrator or the predetermined data management policy 1000 (to be described later), and when a search condition of a transaction whose access right is to be set or deleted is provided as input, the transaction extraction module 320 is used to extract a target transaction ID. Then, with reference to the block-chain metadata management table 800, a storage position of the transaction data corresponding to the target transaction ID is specified, and the access right and the retention period are set in a fine unit for each piece of the data.

The transaction extraction module 320, in response to a call from the fine grain access control information setting module 310, receives a search condition of a transaction whose access right is to be set or deleted as input and extracts a transaction whose access right is to be set or deleted in the fine unit. For example, taking an ID of a bank account as input, all transaction IDs related to the bank account are extracted. Here, as the search condition of the transactions, each the block-chain block 700 may be searched, or in order to speed up extraction processing, a list of the transaction IDs related to the bank account ID may be stored as an index and only the index may be searched.

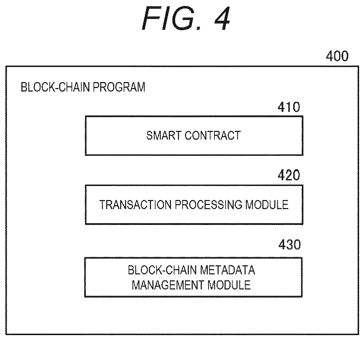

As shown in FIG. 4, the block-chain program 400 includes one or more smart contracts 410, a transaction processing module 420, and a block-chain metadata management module 430.

The smart contract 410 is a module that implements some contracts in a cyber space using a function of the block-chain system, and is, for example, a program for processing a transaction of a financial asset such as virtual currency and securities. A plurality of types of the smart contracts 410 can be arranged in the block-chain program 400.

The transaction processing module 420 receives a transaction request from the client terminal 280 and executes a corresponding smart contract 410 based on contents of the transaction request. Further, the transaction processing module 420 transmits an approval request to the transaction processing module 420 of another block-chain node 220, agrees and confirms that a transaction processing result is correct with the another block-chain node 220, and then returns the transaction processing result to the client terminal 280.

When confirming the transaction processing result, the transaction processing module 420 bundles a plurality of the transaction processing results as the block-chain block 700. Then, the transaction processing module 420 adds the block-chain block 700 to a data area 610 (to be described later) of the block-chain block storage file 600, and updates the block-chain metadata management table 800 (to be described later).

The block-chain metadata management module 430 is a module that is executed in response to a request from the data management program 300 or the like, and when the transaction ID or a block ID is received as input, a file ID (for example, a file path) or an offset of a corresponding transaction or block is output with reference to a block-chain metadata management table 800 (to be described later).

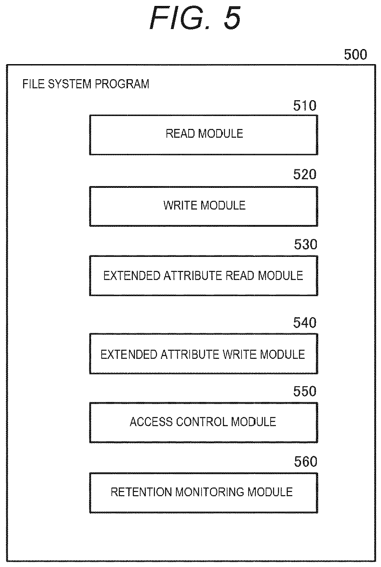

As shown in FIG. 5, the file system program 500 includes a read module 510, a write module 520, an extended attribute read module 530, an extended attribute write module 540, an access control module 550, and a retention monitoring module 560.

The read module 510 is a module that is executed in response to a read request issued by the block-chain program 400 or the like, and the read module 510 accesses the data area 610 of the file based on the file ID or the offset to read the data, and returns the data to an issuing source of the read request.

The write module 520 is a module that is executed in response to a write request issued by the block-chain program 400 or the like, and the write module 520 accesses the data area 610 of the file based on the file ID or the offset to write the data.

The extended attribute read module 530 is a module that is executed in response to an extended attribute read request issued by the data management program 300 or the like, and the extended attribute read module 530 accesses an extended attribute area 630 of the file based on the file ID to read the data, and returns the date to an issuing source of the extended attribute read request.

The extended attribute write module 540 is a module that is executed in response to an extended attribute write request issued by the data management program 300 or the like, and the extended attribute write module 540 accesses the extended attribute area 630 of the file based on the file ID to write the data.

The access control module 550 is a module that is executed in response to calls from the read module 510, the write module 520, the extended attribute read module 530, the extended attribute write module 540, and the like, and the access control module 550 determines an access right with a fine grain as necessary in addition to a determination of an access right in a file unit, and responds as to whether or not access is possible in the file unit or whether or not access is possible in a specific area of the file.

The retention monitoring module 560 is a module that is executed regularly or at a specific time preset by the administrator or the like, and the retention monitoring module 560 monitors retention information 930 in the fine grain access control table 900, and deletes the data collectively when the retention period has expired.

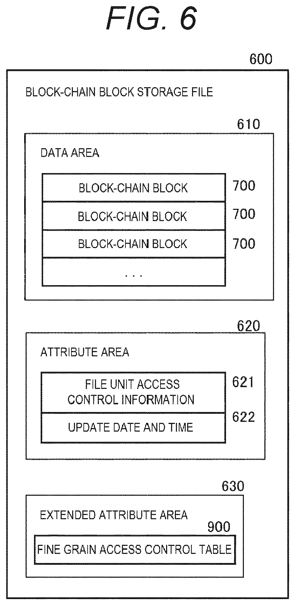

Next, each data structure used in the block-chain node 220 will be described with reference to FIGS. 6 to 10.

The block-chain block storage file 600 is a file that stores a block-chain block and attribute information thereof, and includes the data area 610, an attribute area 620, and the extended attribute area 630 as shown in FIG. 6.

The data area 610 is an area where a data body of the file is stored, and in a case of the block-chain block storage file 600, the block-chain block 700 is stored. Details of the block-chain block 700 will be described later.

The attribute area 620 is an area that stores the attribute information of the file, and stores, for example, file unit access control information 621 and update date and time 622. The file unit access control information 621 is specifically a user ID or a group ID who has ownership of the file, permission information, and the like. In addition to the above, the attribute area 620 may include creation date and time, access date and time, and the like.

The extended attribute area 630 is an area where a user of the file stores any attribute information. The extended attribute area 630 stores, for example, the fine grain access control table 900 used during an access control in a unit of transaction data.

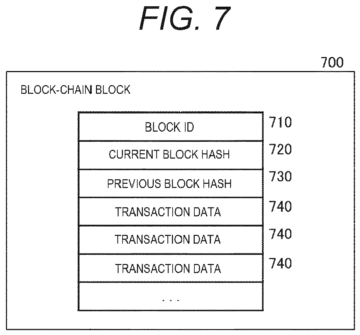

The block-chain block 700 is a basic unit for implementing the block-chain, and includes a block ID 710, a current block hash 720, a previous block hash 730, and transaction data 740, as shown in FIG. 7.

The block ID 710 is an identifier (ID) for uniquely identifying the block-chain block 700.

The current block hash 720 is a hash value of all the transaction data 740 included in the block-chain block 700.

The previous block hash 730 is a hash value of a previous block in the block-chain. In this way, blocks are associated with each other in a form that is difficult to falsify by storing the hash value of the previous block, so that a series of the blocks is called a block-chain. For example, when a part of the block-chain block is deleted by the retention monitoring module 560, the hash value may be changed. In such a case, the retention monitoring module 560 performs deletion processing while maintaining the hash value using a chameleon hash function or the like.

The transaction data 740 includes information such as a result of transaction processing executed by the transaction processing module 420 and which block-chain node 220 is agreed on.

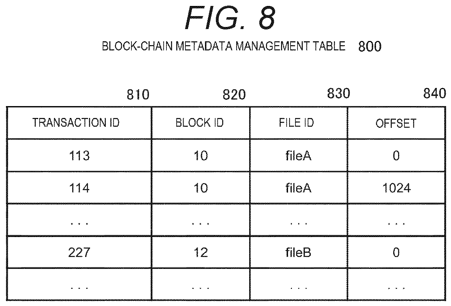

The block-chain metadata management table 800 is information provided by directly accessing date of the block-chain block regardless of a mechanism of the block-chain, and is a table including a transaction ID 810, a block ID 820, a file ID 830, and an offset 840 as one entry, as shown in FIG. 8. The transaction ID 810 is an ID for uniquely identifying a transaction and data thereof. The block ID 820 is an ID for uniquely identifying the block-chain block 700. The file ID is an ID, for example, a file path for uniquely identifying a file in the file system. The offset 840 is a value showing where (for example, which byte) transaction data of the entry is located on the file. That is, the block-chain metadata management table 800 is information used to specify in which file and at which position a target transaction date is located. The block-chain metadata management module 430 provides an access interface to the block-chain metadata management table 800.

The fine grain access control table 900 is a table in which information for enabling fine grain access of the block-chain block storage file 800 is stored, and is a table including a fine grain access area 910, an ACL 920, and the retention information 930 as one entry.

The area 910 is information representing a specific area (for example, from which byte to which byte) of the block-chain block storage file 800 including the fine grain access control table 900.

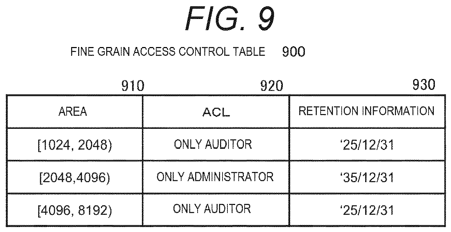

The access control list (ACL) 920 is access control information set for the area 910, in other words, lists who is permitted to perform what operations on the area. For example, in an example shown in FIG. 9, the area is set such that only the auditor can access 1024-th byte to 2048-th byte and 4096-th byte to 8192-th byte, and only the administrator can access 2048-th byte to 4096-th byte. For other areas, the ACL 920 is not set, but the access may be permitted or denied by default. Alternatively, the file unit access control information 621 may be inherited.

The retention information 930 is information related to retention set for the area 910, and includes date and time when the retention period ends. In the example shown in FIG. 9, since the retention period of the area from the 1024-th byte to the 2048-th byte expires on December 31, 2025, the area can be deleted thereafter.

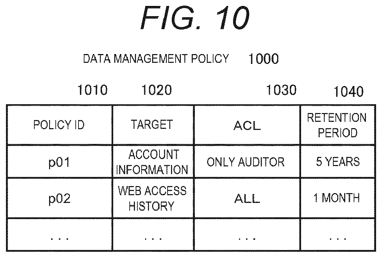

The data management policy 1000 is information describing the search condition of the transaction whose access right is to be set or deleted and a trigger for executing the setting, and can be implemented by table data as shown in FIG. 10.

As shown in FIG. 10, the data management policy 1000 includes a policy ID 1010, a target 1020, an ACL 1030, and retention period 1040.

The policy ID 1010 is an ID that uniquely identifies the data management policy. The target 1020 is an application target of the data management policy. The ACL 1030 is access control information to which the data management policy is applied. The retention period 1040 is a data maintenance period to which the data management policy is applied. For example, in the data management policy whose policy ID 1010 is "p01", the target 1020 is "account information", and it is set that only the "auditor" can access the data as the ACL 1030, and "5 years" is set as the retention period 1040.

When the deletion processing is executed in response to a request from a subject of personal data (for example, a holder of a deposit account), the administrator inputs an ID of the personal data and performs fine grain access control information setting processing. On the other hand, in a case of periodically deleting an account that has not been used for a long period of time, the fine grain access control information setting processing is automatically performed by setting a search condition of an unused period and a search cycle (for example, every day) as the data management policy 1000.

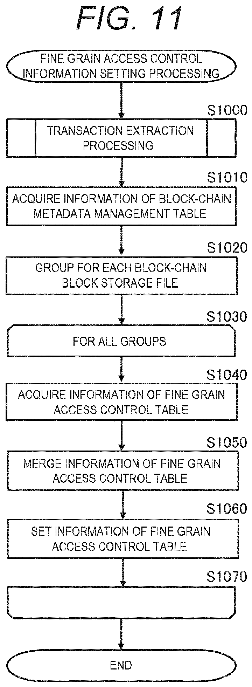

Next, the processing of the data management system will be described with reference to FIGS. 11 to 13.

First, the fine grain access control information setting processing will be described with reference to FIG. 11.

The fine grain access control information setting processing is processing executed by the fine grain access control information setting module 310, and is executed when an instruction from the administrator is received or is executed automatically according to a schedule specified in advance in the data management policy 1000. Input for the fine grain access control information setting processing is, for example, a search condition for a target transaction, a retention period, a list (ACL) of users who can access the data during the retention period, and the like.

First, the fine grain access control information setting module 310 passes the search condition of the target transaction received as input to the transaction extraction module 320, and the transaction extraction module 320 executes transaction extraction processing (S1000). The transaction extraction module 320 searches for a target transaction that matches the search condition, and responds with a list of found transaction IDs.

Next, the fine grain access control information setting module 310 refers to the block-chain metadata management table 800, and acquires a file ID and an offset of the block-chain block storage file 600 corresponding to each transaction ID included in the list acquired in S1000 (S1010).

Then, the fine grain access control information setting module 310 groups the offsets for each block-chain block storage file 600 (S1020). The grouping is for performing processing in the file unit.

Then, the fine grain access control information setting module 310 executes processing from S1040 to S1060 for all the groups grouped in S1020 (S1030).

First, the fine grain access control information setting module 310 acquires information of the fine grain access control table 900 of the block-chain block storage file 600 via the extended attribute read module 530 of the file system program 500 (S1040).

Next, the fine grain access control information setting module 310 merges the information of the fine grain access control table 900 acquired in S1040 with the fine grain access control information to be set (S1050) . Here, for example, when the same ACL 920 and the retention information 930 are set for the area 910 of two pieces of the transaction data 740, merging means that the two areas 910 are merged into one entry. The fine grain access control table 900 can be reduced by merge processing.

Then, the fine grain access control information setting module 310 sets a new fine grain access control table 900 in the block-chain block storage file 600 via the extended attribute write module 540 of the file system program 500 (S1060).

When the processing from S1040 to S1060 has been executed for all the groups (S1070), the fine grain access control information setting module 310 ends the processing.

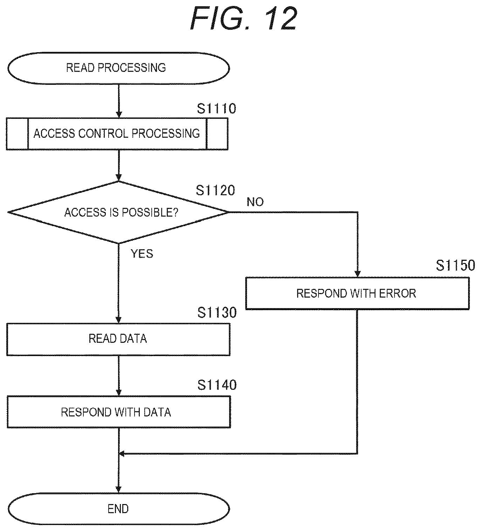

Next, details of read processing will be described with reference to FIG. 12.

The read processing is processing executed by the read module 510.

The read processing is executed in response to a read request for the file system program 500. The read request is issued to the file system program 500 by the block-chain program 400, for example, when the block-chain program 400 reads data of the block-chain block storage file 600. Alternatively, a program other than the block-chain program 400, such as a data analysis program or an audit program, may read the block-chain block storage file 600. The read request is provided with a file ID, an offset that is a start position of data to be read, a size of the data to be read, and the like as arguments.

First, the read module 510 internally calls the access control module 550 and executes access control processing (S1110). The access control module 550 is provided with, as input, a file ID, an offset, and a data size passed to the read module 510. As a result of the access control processing, the access control module 550 responds whether or not access is possible. Details of the access control processing will be described later.

When the result is accessible (S1110: YES), the read module 510 reads data based on a designated offset and size (S1130).

Finally, the read module 510 responds with the data read in S1130 (S1140) and ends.

On the other hand, when the result is inaccessible (S1110: NO), the read module 510 responds with an error (S1120) and the processing ends.

In the above description, the read processing is taken as an example. However, write processing is the same except that the reading of data is changed to writing.

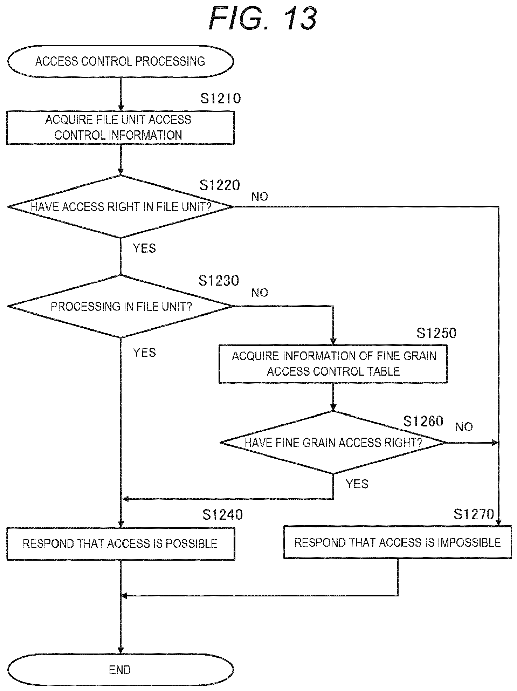

Next, the details of the access control processing will be described with reference to FIG. 13.

The access control processing is processing corresponding to S1110 in FIG. 12, and is processing executed by the access control module 550.

The access control module 550 is executed in response to calls from various modules of the file system program 500 such as the read module 510 and the write module 520. The access control module 550 is provided with a file ID and, if necessary, an offset and a size as input. The read processing and the write processing are executed for a specific area of the file. However, processing of the attribute information and the extended attribute information are executed for a specific file, so that there is no offset and size.

First, the access control module 550 acquires the file unit access control information 621 in the attribute area 620 of the block-chain block storage file 600 based on the file ID provided as input (S1210).

Then, the access control module 550 collates execution context information of the access control processing (for example, the read processing, identifiers of a user or a group executing the access control processing) with the file unit access control information 621 acquired in S1210, and determines whether or not the user or the group has an access right to the file in the file unit (S1220).

When the user or the group has the access right in the file unit (S1220: YES), the access control module 550 determines whether a caller is processing in the file unit such as reference and setting of the attribute information, or processing in an area unit such as the read processing or the write processing (S1230) . The determination can be made, for example, based on whether or not the input to the access control module 550 has an offset and a size.

When the processing is in the file unit (S1230: YES), the access control module 550 responds that access is possible (S1240), and the processing ends.

On the other hand, when the processing is not in the file unit (S1230: NO), the information of the fine grain access control table 900 is acquired via the extended attribute read module 530 based on the file ID provided as input (S1250).

Then, the access control module 550 collates the execution context information of the access control processing with the fine grain access control table 900 acquired in S1250, and determines whether or not the user or the group has an access right for a requested area (S1260).

When the user or the group has the access right for the area (S1260: YES), the access control module 550 responds that access is possible (S1240), and the processing ends.

When the user or the group does not have the access right in the file unit (S1220: NO), or when the user or the group does not have an access right for the area (S1260: NO), the access control module 550 responds that access is impossible (S1270), and the processing ends.

As described above, according to the present embodiment, in the block-chain system, an access control can be performed in a unit of fine grain such as the transaction unit in addition to the file unit.

In the present embodiment, the read processing has been described as an example, but similar access control processing, such as the write processing, can be performed for other access interfaces in the file system.

Further, the file system has been described as an example, but the invention may be applied to a storage system such as an object storage.

Further, the block-chain program has been described as an example, but the invention may be applied to other middleware (for example, RDBMS) that requires a fine grain access control. Some RDBMSs have a function of a fine grain access control in such as a row unit. However, in order to control direct access to a file or an object that stores data managed by the RDBMS, a fine grain access control in cooperation with the file system and the object storage described in the present embodiment is useful.

### [Second Embodiment]

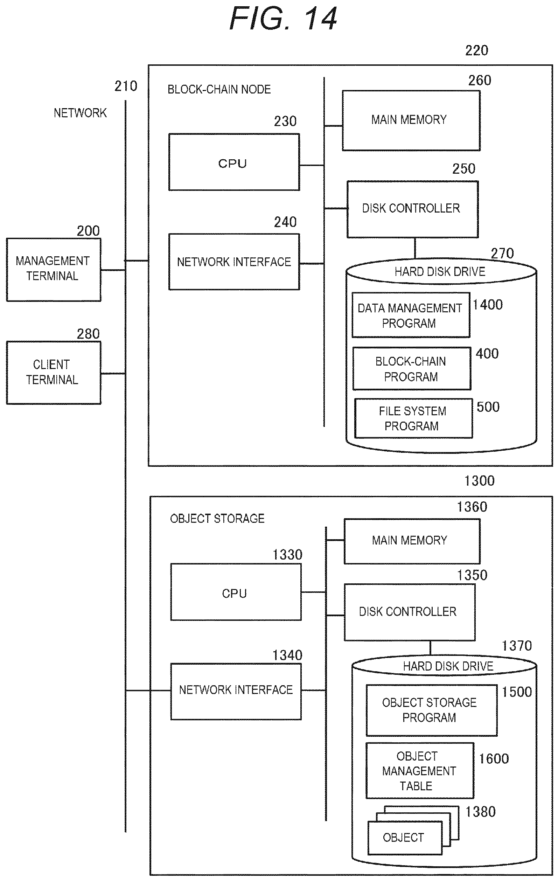

A second embodiment according to the invention will be described below with reference to FIGS. 14 to 18.

In the first embodiment, the fine grain access control processing related to the read processing has been described on the premise of the block-chain system to which the block-chain nodes are connected.

In the present embodiment, the data management in the first embodiment is expanded, and an application range of the fine grain access control is expanded to data related to an object storage of a backup destination. Hereinafter, differences from the first embodiment will be mainly described.

First, a configuration of a data management system according to the second embodiment will be described with reference to FIG. 14.

The data management system according to the present embodiment includes an object storage 1300 in addition to the block-chain nodes 220 according to the first embodiment. In the object storage 1300, data of the block-chain node 220 is backed up.

The object storage 1300 is an information processing device that provides an object storage service to the block-chain node 220 and the like. Similar to the block-chain node 220, as shown in FIG. 14, the object storage 1300 includes a CPU 1330, a network interface 1340, a disk controller 1350, and a main memory 1360, which are connected via an internal communication path (for example, a bus).

The CPU 1330 controls each unit of the object storage 1300 to execute a program loaded into the main memory 1360. The main memory 1360 is a storage device that temporarily stores loaded programs and work data. The network interface 240 is a unit that controls an interface for communication with the client terminal 280, the management terminal 200, and the block-chain node 220 via the network 210. The disk controller 1350 is a unit that controls an auxiliary storage device such as a hard disk drive 1370 or a solid state drive. The disk controller 1350 inputs and outputs data of the hard disk drive 1370, for example, in a block unit based on input and output requests of various programs loaded in the main memory 1360.

An object storage program 1500 is installed in the hard disk drive 1370.

The object storage program 1500 is a program that inputs and outputs data in an object unit in response to a request from the block-chain node 220 or the like.

In addition, the hard disk drive 1370 stores objects 1380 and an object management table 1600. Here, the object is regarded as a unit of data accessed by the object storage.

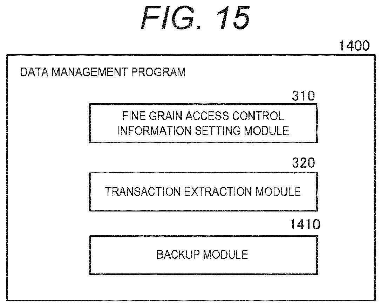

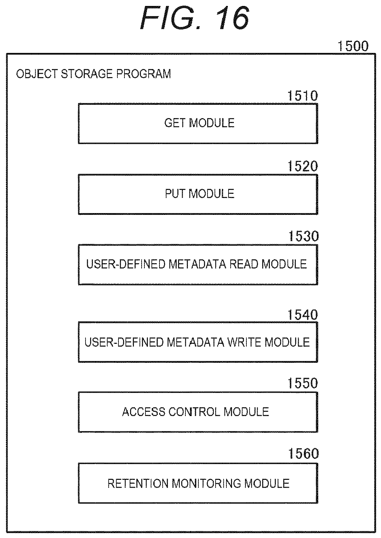

Next, a module structure of each program operating in the object storage 1300 will be described with reference to FIGS. 15 and 16.

A data management program 1400 in the present embodiment includes a backup module 1410 in addition to the data management program in the first embodiment. The backup module 1410 is a module that is executed based on an instruction from an administrator or a predetermined schedule, and backs up (backup: copy) the block-chain block storage file 600 and the like to the object storage 1300. For example, when the block-chain block storage file 600 is not frequently used in the block-chain node 220, the file may be migrated instead of being copied to the object storage 1300 having a low data storage cost.

The object storage program 1500 is a program that handles access to an object in the object storage 1300, and as shown in FIG. 16, includes a GET module 1510, a PUT module 1520, a user-defined metadata read module 1530, a user-defined metadata write module 1540, an access control module 1550, and a retention monitoring module 1560.

The GET module 1510 is a module that is executed based on a GET request issued by the block-chain node 220 or the like. Here, the GET request is, for example, an access request conforming to a hypertext transfer protocol (HTTP) protocol. The GET module 1510 accesses the object 1380 to read data, and returns the data to an issuing source of the GET request.

The PUT module 1520 is a module that is executed based on a PUT request issued by the block-chain node 220 or the like. Here, the PUT request is, for example, an access request conforming to the HTTP protocol. The PUT module 1520 receives data and writes the date as the object 1380.

The user-defined metadata read module 1530 is a module that is executed in response to a user-defined metadata read request. Here, the user-defined metadata read request is, for example, one of the GET requests to which a specific parameter is added while conforming to the HTTP protocol. The user-defined metadata read module 1530 receives, as a key, an object ID provided as input to acquire user-defined metadata 1650 in the object management table 1600 (to be described later), and responds to an issuing source of the user-defined metadata read request.

The user-defined metadata write module 1540 is a module that is executed in response to a user-defined metadata write request. Here, the user-defined metadata write request is, for example, one of the PUT requests to which a specific parameter is added while conforming to the HTTP protocol. The user-defined metadata write module 1540 writes data provided as input to the user-defined metadata 1650 of the object management table 1600 (to be described later).

The access control module 1550 is a module that is executed in response to calls from the GET module 1510, the PUT module 1520, the user-defined metadata read module 1530, the user-defined metadata write module 1540, and the like. The access control module 1550 determines an access right with a fine grain as necessary in addition to a determination of an access right in the object unit, and responds whether or not access is possible in the object unit or whether or not access is possible in a specific area of the object. Although targets and interfaces are different between a file and an object, access control processing of the object is substantially the same as the access control processing shown in FIG. 13 of the first embodiment.

The retention monitoring module 1560 is a module that is executed regularly or at a specific time preset by the administrator or the like. The retention monitoring module 1560 is the same as the retention monitoring module 560 of the file management system 500 shown in FIG. 5 of the first embodiment except for monitoring the retention information 930 based on the fine grain access control table 900 stored in the user-defined metadata 1650.

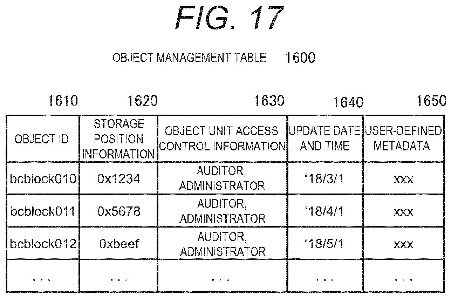

Next, a data structure used in the object storage will be described with reference to FIG. 17.

As shown in FIG. 17, the object management table 1600 is a table including an object ID 1610, storage position information 1620, object unit access control information 1630, update date and time 1640, and the user-defined metadata 1650 as one entry.

The object ID is an ID for uniquely identifying the object 1380. The storage position information 1620 is information related to a physical storage position of the object 1380, and is, for example, a logical block number of a disk drive. The object unit access control information 1630 is, for example, a list of IDs of users each having an access right for the object. The update date and time 1640 is last update date and time of the object. The user-defined metadata 1650 is metadata that can be freely set by the user for object management, in addition to metadata managed by a system by default, such as the update date and time 1640. A format of the user-defined metadata 1650 is described by, for example, eXtensible markup language (XML), javascript object notation (JSON), or the like. The fine grain access control information stored in the fine grain access control information table 900 in the extended attribute area 630 of the block-chain block storage file 600 shown in the first embodiment is converted and stored in the user-defined metadata 1650.

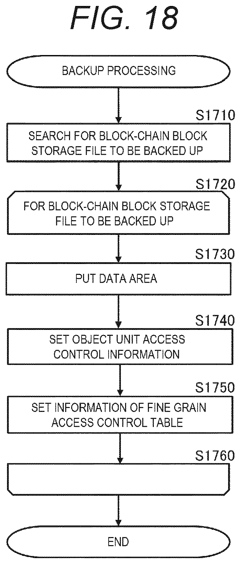

Next, processing of the object storage will be described with reference to FIG. 18.

Backup processing is processing executed by the backup module 1410, and is executed based on the instruction from the administrator or the predetermined schedule (for example, 3 am every day). Input to the backup processing is a backup condition, for example, "all block-chain block storage files added on the day before yesterday" and the like.

First, the backup module 1410, based on the backup condition provided as input, searches for a block-chain block storage file 600 to be backed up and outputs a list of corresponding file IDs (S1710).

Next, the backup module 1410 executes processing from S1730 to S1750 for all the block-chain block storage files 600 listed in S1710 (S1720).

First, the backup module 1410 accesses and reads the data area 610 of the block-chain block storage file 600 based on the file ID, and puts data to the object storage 1300 via the PUT module 1520 (S1730).

Next, the backup module 1410 acquires the file unit access control information 621 of the file, maps the file unit access control information 621 to the object unit access control information 1630, and sets the file unit access control information 621 to an object that is put in S1730 (S1740) . Here, mapping refers to performing association when namespace of the user ID is different between the file system and the object storage. A correspondence relationship between user IDs is managed by, for example, the data management program 1400.

Then, the backup module 1410 acquires information of the fine grain access control table 900 of the file, converts the information into the format of the user-defined metadata 1650, and then sets the information via the user-defined metadata write module 1530 (S1750).

When the processing from S1730 to S1750 has been executed for all target block-chain block storage files (S1760), the backup module 1410 ends the processing.

As described above, according to the present embodiment, when a file with settings for fine grain access is copied or migrated in a block-chain system, in an object storage that is a copy destination or a migration destination, it is possible to provide a fine grain access control similar to that of a copy source and a migration source. In the above description, a combination of the file system and the object storage has been described as an example, but migrating and copying may be performed between the file systems and between the object storages.

Features described in this specification and in the claims or shown in a figure shall be deemed combinable with and amongst each other also if their combination is not expressly described, to the extent that the combination is technically feasible. Features described in a certain context, embodiment, figure or claim shall be deemed separable from this claim, context, embodiment or figure and shall be deemed combinable with every other figure, claim, context or embodiment, to the extent that it is technically feasible. Embodiments and figures shall not be understood as being meant necessarily exclusive against each other. Descriptions of a method or a procedure or a method step or a procedural step shall be understood also as description of means and/or possibly program instructions of executable code on a data carrier adapted for implementing the method or procedure or method step or procedural step, and vice versa.

## Claims

1. A data management system, comprising:
a processor that controls access to data to be processed by an information processing device,
wherein the data includes a plurality of pieces of sub-data,
wherein fine grain access information includes a position of the sub-data in the data and a provision of an access right to the sub-data, and
wherein the processor controls access to the sub-data in the data based on the fine grain access information.

2. The data management system according to claim 1,
wherein the fine grain access information is created for each piece of data and stored in the data, and the processor controls the access to the sub-data based on fine grain access information stored in data to be accessed.

3. The data management system according to claim 2,
wherein access control information is set for the data, and
wherein when the data is accessible based on the access control information, fine grain access control information in the data is accessed to determine whether the sub-data is accessible.

4. The data management system according to claim 1,
wherein the fine grain access information further includes retention information that maintains the sub-data, and
wherein the access to the sub-data is controlled based on the retention information.

5. The data management system according to claim 3,
wherein the data is a block-chain block storage file, and the sub-data is transaction data in a block-chain block,
wherein the access control information is stored as attribute information in the block-chain block storage file including the block-chain block, and
wherein the fine grain access information is stored as an extended attribute in the block-chain block storage file including the block-chain block.

6. The data management system according to claim 2,
wherein when setting the fine grain access information, the processor divides a plurality of data into groups and sets the fine grain access information collectively for a plurality of pieces of data belonging to the same group.

7. The data management system according to claim 1,
wherein during backing up of the data, the fine grain access information related to data to be backed up is stored as a part of backup data.

8. A data management method in which a processor is used to control access to data to be processed by an information processing device, the data including a plurality of pieces of sub-data, the data management method comprising:
controlling access to the sub-data in the data by the processor based on fine grain access information,
wherein the fine grain access information includes a position of the sub-data in the data and a provision of an access right to the sub-data.

9. The data management method according to claim 8,
wherein the fine grain access information is created for each piece of data and stored in the data, and
wherein the processor controls the access to the sub-data based on fine grain access information stored in data to be accessed.

10. The data management method according to claim 9, further comprising:
setting access control information for the data; and
accessing fine grain access control information in the data to determine whether the sub-data is accessible when the data is accessible based on the access control information.

11. The data management method according to claim 8,
wherein the fine grain access information further includes retention information that maintains the sub-data, and
wherein the access to the sub-data is controlled based on the retention information.

12. The data management method according to claim 10,
wherein the data is a block-chain block storage file, and the sub-data is transaction data in a block-chain block,
wherein the access control information is stored as attribute information in the block-chain block storage file including the block-chain block, and
wherein the fine grain access information is stored as an extended attribute in the block-chain block storage file including the block-chain block.

13. The data management method according to claim 9, further comprising:
dividing a plurality of pieces of data into groups and setting the fine grain access information collectively for a plurality of pieces of data belonging to the same group by the processor during setting of the fine grain access information.

14. The data management method according to claim 8,
wherein during backing up of the data, the fine grain access information related to data to be backed up is stored as a part of backup data.
